# EUROPEAN PATENT APPLICATION

(11) **EP 0 529 173 A1**
(43) Date of publication of application: **03.03.1993**
(21) Application number: 91630055.1
(22) Date of filing: 22.08.1991
(51) Int. Cl.: F16B 37/12, F16B 39/06

(54) **Self-tapping anti-rotation insert**

(71) Applicant: VSI CORPORATION, Chantilly, Virginia 22021-9998 (US)
(72) Inventor: Read, Frank C., Redmond, Washington 98052 (US)
(74) Representative: Weydert, Robert

(57) **Abstract**

The self-tapping insert (14) has external and internal threads (16, 17), the external thread portion cutting a threaded profile when the insert (14) is installed into a bore (12) formed in a high strength carrier part (10). Longitudinally extending grooves are formed in the external thread of the insert (14) to receive keys (26, 28), the keys preventing the insert (14) from rotating within the carrier part (10).

## Description

### BACKGROUND OF THE INVENTION

### 1. Field of Invention

The present invention relates to keys which are used to lock an insert into a parent material. In particular, the insert, a bushing with internal and external threads, is designed to tap its own threads as it is driven into a drilled or cored hole, the keys preventing rotation of the insert once installed.

### 2. Description of the Prior Art

An early example of a prior art locking key may be found in U.S. Patent 3,270,792, issued September 6, 1966 to Neuschotz et al. The initial mounting or tang portion of the Neuschotz locking key embodies a complete interference fit for retaining the key in a slot of the insert prior to installation. Recurring problems with this type of tang portion configuration include increased driving forces being required in order to install a key having an excessive interference fit due to poor quality manufacturing of either the key or the insert slot.

Co-pending application Serial No. 253,998 filed October 5, 1988, now U.S. Patent No. 4,895,485, assigned to the predecessor company of the assignee of the present invention, discloses an improved locking key for a threaded insert wherein a spring retention mechanism holds the key in the insert slot and yields improved driveability of the key. The spring retention mechanism includes a flexure area in the tang portion and outwardly extending protrusions located on either side of the flexure area. The flexure area is defined by an opening or aperture extending through the tang portion. The aperture is rectangular in shape and centrally located in the tang portion. The protrusions are centrally positioned on either side of the flexure area and each protrusion includes a leading surface area for guiding the key into the slot to its initial mounting position within the insert.

Self-tapping inserts for use with soft material, such as wood and plastic, have also been available in the prior art. Such an insert is shown in U.S. Patent No. 3,103,962 to Neuschotz. The insert of this type forms a threaded profile on the wall of the bore by deforming material in its path.

Inserts designed as permanent fasteners in materials which are machinable but of insufficient strength to sustain applied loads in threads tapped directly into these materials are commercially available. For example, one such insert has internal and external threads and is designed to tap its own threads as it is driven into a drilled or cored hole. The cutting edges are located on the pilot portion of the insert. Another example of this type of insert is disclosed in U.S. Patent No. 3,430,531 to Bosse.

U.S. Patent No. 4,818,165 to Shirai discloses an insert which includes a cylindrical stem having an external thread having a plurality of separate tapping lobes for cutting the threaded profile in the wall of a bore formed in a material. The threaded insert of Shirai is designed to avoid the problem of reduced pull-out strength (the force with which the threaded element is retained against removal from the bore) which occurred in prior art self-tapping inserts such as those disclosed in the aforementioned patent to Neuschotz. Although the threaded insert of Shirai performs extremely well in preventing the threaded element from loosening its threaded engagement with the wall of the bore due to vibration and other stresses, the fabrication cost of the threaded insert is higher than the conventional self-tapping inserts due to the novel design features thereof.

What is desired is to provide a self-tapping insert for use in high strength material such as metals, which incorporates a simplified and relatively inexpensive device in preventing the threaded insert from loosening from the wall of the material and rotating out of the material due to vibration and other stresses.

### SUMMARY OF THE PRESENT INVENTION

The present invention provides a self-tapping cutting type insert which includes key inserts for preventing rotation and eventual removal of the insert after installation due to vibration and other stresses.

A commercially available self-tapping insert with external and internal threads and modified to include keys mounted in grooves extending generally longitudinally through external threads formed on the insert is first driven into a drilled or cored hole formed in a carrier part to form a threaded profile on the wall of the hole. After the insert is installed in the carrier part, the keys are driven longitudinally relative to the insert to form an interlock with the threads of the carrier part to positively lock the insert against unscrewing rotation.

By combining the key interlock features of commercially available inserts with the features of a self-tapping cutting type insert, a self-tapping insert is provided having an interlock system to lock the insert against unscrewing rotation in a cost-effective manner.

### BRIEF DESCRIPTION OF THE DRAWING

For a better understanding of the invention as well as other objects and further features thereof, reference is made to the following description which is to read in conjunction with the accompanying drawing wherein:
Figure 1 is a perspective view illustrating the insert of the present invention prior to formation of the threaded profile in the carrier material.
Figure 1A is a side view illustrating the relationship between the components of the insert of the present invention;
Figure 2 is a cross-sectional view illustrating the cutting of the thread profile in the carrier material;
Figure 3 illustrates the fully installed insert; and
Figure 4 illustrates the installation of the insert keys.

### DETAILED DESCRIPTION OF THE INVENTION

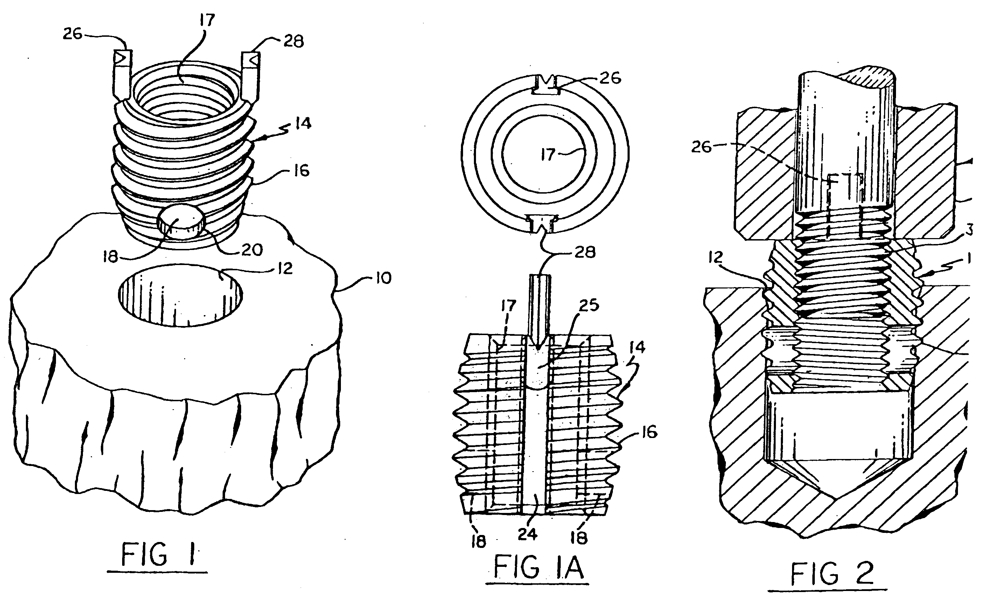

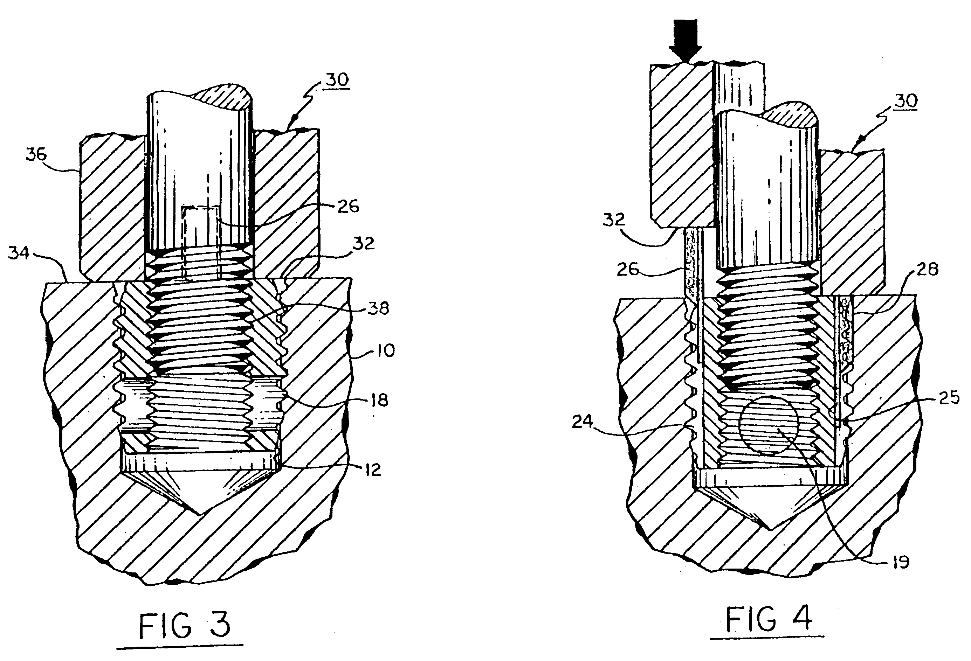

Referring now to Figures 1 and 1A, a typical application for use of the present invention is illustrated. A carrier material 10 is shown in which a drilled hole or core 12 is provided. The carrier material is representative of high strength items such as an aircraft panel or a computer housing and is typically made of metal material such as aluminum and magnesium. An insert 14 of the type formed in accordance with the teachings of the present invention is shown positioned as it would appear just prior to being inserted into the carrier opening 12 for installation therein and forming a thread 19 (Figs. 2-4) in the wall of opening 12. The insert 14 includes a cylindrical body portion 15 having external or outer threads 16, internal threads 17, and hole 18, formed thereon, the circumferential edge 20 of hole 18 forming cutting edges to form the threads of the carrier opening 12 as the insert is installed. It should be noted that alternate techniques can be used to form threads of the carrier opening, such as scarf cutting and the non-cutting technique disclosed in the Shirai patent. The self-tapping insert assembly as described is commercially available from a number of manufacturers. Depending upon the size of the insert, the insert is modified by forming two or more key slots, or grooves, 24 and 25 (see Figure 4) thereon which extend longitudinally through the external threads 16. Locking keys 26 and 28 are designed in a conventional manner to be positioned in grooves 24 and 25, respectively. The initial position prior to installation of the keys are shown in Fig. 1.

The preferred form of the configuration of keys 26 and 28 is described in the aforementioned co-pending application and will be described briefly hereinafter. However, it is noted that other key arrangements can be used. Keys 26 and 28 have an upper (locking) portion and a lower (tang) portion. Each key includes a top surface, a flat back surface, and a bottom surface. The flat surface is typically constructed so as to permit a sliding displacement of the key along the key groove as the key is installed therein. The top surface is generally flat in order to provide a driving surface for the installation tool and to provide a flush surface area with the carrier material after the key is finally and properly installed in its locking position as shown in Figure 4. Each key includes a surface which is suitable for cutting through the threads of the opening in the carrier material in order to lock the insert therein.

The specific features of the key are set forth in the aforementioned co-pending application, the teachings of which that are necessary for an understanding of the present invention being incorporated herein by reference.

Figure 2 is a cross-sectional view showing an installation tool 30 positioned in engagement with internal threads 17 and after tool 30 has been rotated a number of times whereby a portion of the threaded profile has been formed in the wall of hole 12. Figure 3 is a cross-sectional view showing lower surface 32 of tool 30 in contact with the upper surface 34 of carrier material 10. The position of tool head 36 relative to its mounting on threaded shaft 38 limits the depth of the threaded profile formed on the wall of hole 12.

Tool 30 is designed such that keys 26 and 28 are slideably supported within grooves formed in tool head 36 during the cutting of the threaded profile in the wall of hole 12 and the installation of insert 14 as shown in Figures 2 and 3.

After installation of insert 14, tool head 30 is moved vertically upwardly and rotated a predetermined amount such that its lower surface 32 contacts the top surface of the keys to drive the key longitudinally to cut an area of the threaded profile in the wall of hole 12 in a conventional manner.

To now describe in detail the process of installing the insert 14 within carrier material 10, assume first of all that the insert 14, carrying keys 26 and 28, are installed into the carrier part 10 as shown in Figure 3. After the insert 14 has reached this position, a user drives keys 26 and 28 longitudinally downward with a hammer or driving tool 30 from the Figure 3 position to the Figure 4 position of the keys (key 28 is shown fully installed; key 26 partially installed). As each key advances longitudinally downward, the cutting surface of insert 14 cuts through and deforms the threads of the carrier part 10, and thus forms an effective interlock preventing unscrewing rotation of the insert 14.

The present invention thus provides a self-tapping, cutting type insert which provides significant improvements over the prior art devices, particularly in the provision of a key interlock device to lock the self-tapping insert against unscrewing rotation in a cost-effective manner.

While the invention has been described with reference to its preferred embodiment, it will be understood by those skilled in the art that various changes may be made and equivalents may be substituted for elements thereof without departing from the true spirit and scope of the invention. In addition, many modifications may be made to adapt a particular situation or material to the teaching of the invention without departing from its essential teachings.

## Claims

1. An insert for cutting a threaded profile in the wall of a hole formed on a metal carrier material and for insertion into said hole, said insert having a cylindrical body portion and a cutting member thereon to form said threaded profile as said insert is installed in said carrier material, an exterior thread on said body complementary to and for engagement with the thread of the opening, the improvement comprising a first groove formed in the body portion longitudinally interrupting the insert exterior thread, and a first locking key positioned in said first groove and having first and second operative positions.

2. The insert of claim 1 wherein said first key is in said first operative position when said insert is installed in said metal carrier material and in said second position when said first key is driven into engagement with said threaded profile.

3. The insert of claim 1 further including a second groove formed in the body portion longitudinally interrupting the insert exterior thread, and a second locking key positioned in said second groove having first and second operative positions.

4. The insert of claim 3 wherein said second locking key is in said first operative position when said insert is installed in said carrier material and in said second position when said second key is driven into engagement with said threaded profile.
